# EUROPÄISCHE PATENTSCHRIFT

(11) **EP 2 906 912 B1**
(45) Veröffentlichungstag und Bekanntmachung des Hinweises auf die Patenterteilung: **08.01.2020**
(21) Anmeldenummer: 14741194.6
(22) Anmeldetag: 12.05.2014
(51) Int. Cl.: G01F 25/00, G01F 1/60, G01F 1/58

(54) **VERFAHREN ZUM BETREIBEN EINES MAGNETISCH-INDUKTIVEN DURCHFLUSSMESSGERÄTS**
METHOD OF OPERATING A MAGNETIC-INDUCTIVE FLOWMETER
PROCÉDÉ DE FONCTIONNEMENT D'UN DÉBITMÈTRE DU TYPE ÉLECTRO-MAGNÉTIQUE

(30) Priorität: 26.08.2013 DE 102013014016
(43) Veröffentlichungstag der Anmeldung: 19.08.2015
(73) Patentinhaber: KROHNE Messtechnik GmbH, 47058 Duisburg (DE)
(72) Erfinder: NEVEN, Josef, 26540 Mours St. Eusèbe (FR)
(74) Vertreter: Gesthuysen Patent- und Rechtsanwälte
(86) Internationale Anmeldenummer: PCT/EP2014/001268
(87) Internationale Veröffentlichungsnummer: WO 2015/028105

(56) Entgegenhaltungen:
- DE-A1- 19 713 751
- DE-A1- 19 907 864
- DE-A1- 19 917 268
- DE-A1-102006 006 152
- DE-A1-102009 001 833

## Beschreibung

Die Erfindung betrifft ein Verfahren zum Betreiben eines magnetisch-induktiven Durchflussmessgeräts mit einer Magnetfelderzeugungseinrichtung zur Erzeugung eines ein strömendes Medium durchsetzenden Magnetfelds und mit einer Messeinrichtung zur Bestimmung von die Feldstärke des von dem Magnetfeld in dem strömenden Medium induzierten elektrischen Feldes wiedergebenden Messwerten. Die Magnetfelderzeugungseinrichtung umfasst wenigstens einen Elektromagneten und einen zumindest teilweise vom Magnetfeld durchdrungenen Magnetfeldleiter, wobei die Permeabilität des Magnetfeldleiters eine nichtlineare Funktion der magnetischen Feldstärke ist. Dabei wird der Elektromagnet mindestens mit einem ersten Stromwert und einem zweiten Stromwert bestromt und von der Messeinrichtung ein erster Messwert bei mit dem ersten Stromwert bestromten Elektromagneten und ein zweiter Messwert bei mit dem zweiten Stromwert bestromten Elektromagneten bestimmt. Derartige Verfahren sind aus der DE 10 2006 006 152 A1 und der DE 197 13 751 A1 bekannt.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K. W. Bonfig, 3. Auflage, Vulkan-Verlag Essen, 2002, Seiten 123 bis 167, und auch auf die Literaturstelle "Grundlagen magnetisch-induktive Durchflussmessung" von Dipl.-Ing. Friedrich Hofmann, 3. Auflage, 2003, Druckschrift der Firma KROHNE Messtechnik GmbH & Co. KG, verwiesen.

Das grundlegende Prinzip magnetisch-induktiver Durchflussmessgeräte geht auf Michael Faraday zurück, der bereits im Jahr 1832 vorgeschlagen hat, das Prinzip der elektromagnetischen Induktion zur Messung der Strömungsgeschwindigkeit eines elektrisch leitfähigen Mediums anzuwenden. Nach dem faradayschen Induktionsgesetz entsteht in einem von einem Magnetfeld durchsetzten strömenden und elektrisch leitfähigen Medium eine elektrische Feldstärke senkrecht zur Strömungsrichtung des Mediums und senkrecht zum Magnetfeld.

Das faradaysche Induktionsgesetz wird bei magnetisch-induktiven Durchflussmessgeräten der eingangs beschriebenen Art dadurch ausgenutzt, dass die Magnetfelderzeugungseinrichtung ein Magnetfeld bereitstellt, welches das strömende Medium durchdringt. Das Magnetfeld wird dabei durch den Elektromagneten erzeugt und von dem Magnetfeldleiter geführt. Das Magnetfeld im Medium weist zumindest eine zur Strömungsrichtung des Mediums senkrechte Komponente auf, wodurch im Medium eine elektrische Feldstärke senkrecht sowohl zu der Richtung des strömenden Mediums als auch zu der Richtung des Magnetfelds entsteht. Die elektrische Feldstärke ist ein Maß für den Durchfluss des Mediums durch das magnetisch-induktive Durchflussmessgerät, und die Messeinrichtung ist zur Bestimmung von Messwerten ausgebildet, welche die Feldstärke wiedergeben.

Der Magnetfeldleiter erlangt seine Fähigkeit zur Führung des von dem Elektromagneten erzeugten magnetischen Flusses durch seine im Vergleich zur Umgebung größere Permeabilität, welche für den magnetischen Fluss einen geringeren Widerstand darstellt. Die Permeabilität ist dabei allerdings keineswegs konstant, sondern vielmehr eine nichtlineare Funktion der magnetischen Feldstärke.

Messwerte, welche die induzierte elektrische Feldstärke wiedergeben, können durch mindestens zwei Elektroden detektiert werden. Die Elektroden können dabei entweder in galvanischem Kontakt mit dem Medium sein oder nur kapazitiv mit dem Medium gekoppelt sein, und sie sind vorzugsweise auf einer gemeinsamen Achse angeordnet, die vorzugsweise parallel zur Richtung der elektrischen Feldstärke ausgerichtet ist. Durch diese Ausrichtung sind die Messwerte maximal. Messwerte können zum Beispiel Spannungsmesswerte sein, welche bei galvanischem Kontakt der Messelektroden mit dem Medium direkt gemessen werden oder bei kapazitiver Kopplung der Messelektroden mit dem Medium aus dem Verschiebungsstrom resultieren.

Magnetisch-induktive Durchflussmessgeräte werden zumeist mit Wechselmagnetfeldern betrieben. Ein Wechselmagnetfeld bedingt Wechselmesswerte, wodurch die zumindest teilweise Kompensation von Störungen, wie elektrochemischer Störspannungen, möglich ist, deren zeitliche Änderung langsamer ist als die zeitliche Änderung des Wechselmagnetfelds.

Das Wechselmagnetfeld kann ein harmonisches Wechselmagnetfeld sein. Bei harmonischen Wechselmagnetfeldern ist die zeitliche Änderung der Magnetfeldstärke eine harmonische Schwingung. Ein harmonisches Wechselmagnetfeld kann durch Speisung des Elektromagneten aus einem vorhandenen Wechselspannungsnetz erzeugt werden. Das Betreiben von magnetisch-induktiven Durchflussmessgeräten mit einem harmonischen Wechselmagnetfeld hat jedoch Nachteile, wie zum Beispiel der DE 199 07 864 A1 Spalte 1, Zeile 53, bis Spalte 2, Zeile 13, zu entnehmen ist.

Nachteile, die sich beim Betreiben eines magnetisch-induktiven Durchflussmessgeräts mit einem harmonischen Wechselmagnetfeld ergeben, können durch das Betreiben mit einem Wechselmagnetfeld vermieden werden, das ein geschaltetes Gleichmagnetfeld ist. Ein geschaltetes Gleichmagnetfeld besteht aus der sich periodisch wiederholenden Abfolge von mindestens zwei Intervallen, wobei in jedem der Intervalle das Magnetfeld nach einem Einschwingvorgang konstant ist und die Magnetfelder in zwei aufeinanderfolgenden Intervallen verschieden sind. Verschiedene Magnetfelder werden durch Bestromung des Elektromagneten mit verschiedenen Stromwerten erzeugt. Ein Stromwert ist dabei durch den Strombetrag und die Stromrichtung charakterisiert. So können sich die Magnetfelder durch unterschiedliche Magnetfeldstärken und/oder unterschiedliche Magnetfeldrichtungen unterscheiden. Zumeist besteht ein geschaltetes Gleichmagnetfeld aus zwei gleich langen Intervallen und die Magnetfelder der Intervalle weisen eingeschwungen die gleiche Magnetfeldstärke, aber entgegengesetzte Magnetfeldrichtungen auf.

Die die Feldstärke des von dem Magnetfeld in dem strömenden Medium induzierten elektrischen Feldes wiedergebenden Messwerte sind proportional zur magnetischen Flussdichte. Ist neben dem von dem Elektromagneten erzeugten Magnetfeld auch ein parasitäres Magnetfeld vorhanden, welches einen Beitrag zur magnetischen Flussdichte im Medium liefert, wird die Durchflussmessung verfälscht. Das parasitäre Magnetfeld kann zum Beispiel durch weitere magnetisch-induktive Durchflussmessgeräte oder Elektromotoren in der Umgebung des magnetisch-induktiven Durchflussmessgeräts erzeugt werden und über den Magnetfeldleiter in das Medium gelangen.

Aus der DE 10 2009 001 833 A1 ist ein Verfahren zum Betreiben eines magnetisch-induktiven Durchflussmessgeräts mit einem Messrohr und einer Spule zur Erzeugung des Magnetfelds bekannt, das in einem durch das Messrohr strömenden Medium eine zum Durchfluss des Mediums durch das Messrohr proportionale Spannung induziert, bei dem in Pausen der Durchflussmessung die Spule zur Bestimmung eines parasitären Magnetfelds verwendet wird.

Aus der DE 199 17 268 A1 ist ein Verfahren zum Überprüfen eines magnetisch-induktiven Durchflussmessgeräts mit einem Messrohr und einer Spulenanordnung zur Erzeugung eines Magnetfelds senkrecht zur Durchflussrichtung eines Mediums bekannt, bei dem die Anstiegszeit oder die Anstiegskurve des durch die Spulenanordnung fließenden Stroms zur Bestimmung eines parasitären Magnetfelds verwendet wird.

Aufgabe der vorliegenden Erfindung ist daher die Angabe eines Verfahrens zum Betreiben eines magnetisch-induktiven Durchflussmessgeräts der eingangs beschriebenen Art, bei dem das Vorhandensein eines parasitären Magnetfelds erkannt wird.

Die zuvor hergeleitete und aufgezeigte Aufgabe ist zunächst und im Wesentlichen dadurch gelöst, dass in einem ersten Schritt ein erstes Messwertpaar aus dem ersten Stromwert und dem ersten Messwert und ein zweites Messwertpaar aus dem zweiten Stromwert und dem zweiten Messwert gebildet wird, dass in einem zweiten Schritt die Korrespondenz der Messwertpaare und der Funktion der Permeabilität bestimmt wird und dass in einem dritten Schritt die Nichtkorrespondenz der Messwertpaare und der Funktion der Permeabilität signalisiert wird. Dabei ist eine Nichtkorrespondenz durch das Vorhandensein eines parasitären Magnetfelds zumindest teilweise im Magnetfeldleiter bedingt.

Der erste Stromwert und der zweite Stromwert müssen voneinander verschieden sein. Dabei ist es unerheblich, ob sich der erste Stromwert und der zweite Stromwert im Strombetrag und/oder in der Richtung unterscheiden. Da magnetisch-induktive Durchflussmessgeräte der eingangs beschriebenen Art quasi ausschließlich entweder mit einem harmonischen Wechselmagnetfeld oder mit einem geschalteten Gleichmagnetfeld betrieben werden, ist es nicht erforderlich, für das erfindungsgemäße Verfahren extra Stromwerte zur Bestromung des Elektromagneten zu erzeugen. Auch ist es meist nicht erforderlich, den ersten Messwert und den zweiten Messwert extra neben den durch die bestehenden Messverfahren für die Bestimmung des Durchflusses notwendigen gemessenen Messwerten zu messen. Für das erfindungsgemäße Verfahren können demnach bereits vorhandene Stromwerte und Messwerte verwendet werden.

Wie schon eingangs ausgeführt, ist die Permeabilität eine nichtlineare Funktion der magnetischen Feldstärke. Folglich gibt es auch Permeabilitätswertpaare, wobei jedes Permeabilitätswertpaar aus einem Permeabilitätswert und einer magnetischen Feldstärke besteht. Die von dem Elektromagneten erzeugte magnetische Feldstärke ist proportional zum Strom durch den Elektromagneten. Demnach können sowohl die Messwerte als auch die Permeabilitätswerte als Funktionen der Stromwerte aufgefasst werden. Die Korrespondenz der Messwertpaare und der Permeabilitätswertpaare kann demnach auch als Korrespondenz der Messwerte und der Permeabilitätswerte aufgefasst werden.

Ist die Korrespondenz der Messwertpaare und der Funktion der Permeabilität nicht gegeben, liegt Nichtkorrespondenz vor und die Nichtkorrespondenz wird signalisiert. Nichtkorrespondenz ist dann gegeben, wenn ein parasitäres Magnetfeld zumindest teilweise im Magnetfeldleiter vorhanden ist. Bei Bestromung mit dem ersten Stromwert und dem zweiten Stromwert und bei Abwesenheit des parasitären Magnetfelds erzeugt der Elektromagnet ein Magnetfeld mit einer ersten magnetischen Feldstärke und einer zweiten magnetischen Feldstärke und ist das Medium mit einer ersten magnetischen Flussdichte und einer zweiten magnetischen Flussdichte gemäß der nichtlinearen Funktion der Permeabilität des Magnetfeldleiters durchsetzt. In dem strömenden Medium wird durch das Magnetfeld eine erste elektrische Feldstärke und eine zweite elektrische Feldstärke induziert, welche proportional zur ersten magnetischen Flussdichte und zur zweiten magnetischen Flussdichte ist. Die Anwesenheit eines parasitären Magnetfelds zumindest teilweise im Magnetfeldleiter bewirkt gemäß der nichtlinearen Funktion der Permeabilität einen Versatz der magnetischen Flussdichte im Magnetfeldleiter und damit auch im strömenden Medium. Dieser Versatz bewirkt folglich auch eine veränderte erste magnetische Flussdichte und zweite magnetische Flussdichte im Magnetfeldleiter und damit auch im strömenden Medium. Durch die veränderte erste magnetische Flussdichte und zweite magnetische Flussdichte im Medium verändern sich auch der erste Messwert und der zweite Messwert und aufgrund der Nichtlinearität der Permeabilität ist die Korrespondenz der Messwertpaare und der Permeabilitätsmesswertpaare nicht mehr gegeben. Diese Nichtkorrespondenz wird sodann signalisiert.

Als Materialien für den Magnetfeldleiter bieten sich insbesondere Materialien an, deren Permeabilität Hysterese aufweist. Die Hysterese bewirkt, dass die Permeabilität oberhalb eines bestimmten Betrages der magnetischen Feldstärke nur noch mit der magnetischen Feldkonstanten als Steigung ansteigt. Das Material ist dann gesättigt. Weist die Permeabilität des Materials des Magnetfeldleiters Hysterese auf, so ist jedoch darauf zu achten, dass das Material bei mindestens einem der Stromwerte nicht gesättigt ist. Andernfalls ist die Nichtkorrespondenz der Messwertpaare und der Permeabilitätswertpaare nicht erkennbar.

Zur Kompensation von chemischen Störsignalen ist es vorteilhaft, wenn die Messwerte bei mindestens einem der Stromwerte mindestens zweimal bestimmt und gemittelt werden. Insbesondere ist es vorteilhaft, die Messwerte bei jedem der Stromwerte mindestens zweimal zu bestimmen und zu mitteln.

Zur Bestimmung der Korrespondenz der Messwertpaare und der Permeabilitätswertpaare ist in einer bevorzugten Ausgestaltung vorgesehen, dass mindestens zwei der Messwertpaare durch eine affine Abbildung abgebildet werden. Dabei wird eines der Messwertpaare durch die affine Abbildung auf ein Argument und den dazugehörigen Funktionswert der Funktion der Permeabilität abgebildet und die Nichtkorrespondenz der Messwertpaare und der Permeabilitätswertpaare ist bei Übereinstimmung von mindestens einem der anderen abgebildeten Messwertpaare mit keinem Argument und dazugehörigem Funktionswert gegeben. Zu den affinen Abbildungen gehören insbesondere Rotation, Translation und Skalierung.

Zur Bestimmung der Korrespondenz der Messwertpaare und der Funktion der Permeabilität ist in einem ganz besonders bevorzugten Ausführungsbeispiel vorgesehen, dass zunächst der Elektromagnet mindestens mit einem dritten Stromwert bestromt wird, dass von der Messeinrichtung ein dritter Messwert bei mit dem dritten Stromwert bestromtem Elektromagneten bestimmt wird und dass ein drittes Messwertpaar aus dem dritten Stromwert und dem dritten Messwert gebildet wird. Dann wird ein erstes Messwertpaartripel aus dem ersten Messwertpaar, dem zweiten Messwertpaar und dem dritten Messwertpaar gebildet. Dabei weisen der erste Stromwert und der zweite Stromwert den gleichen Strombetrag aber entgegengesetzte Vorzeichen auf, und der dritte Stromwert ist Null. Dann wird ein erster Differenzmesswert durch Subtraktion des ersten Messwerts vom dritten Messwert und ein zweiter Differenzmesswert durch Subtraktion des zweiten Messwerts vom dritten Messwert bestimmt und der Betrag des ersten Differenzmesswerts und der Betrag des zweiten Differenzmesswerts werden verglichen. Die Nichtkorrespondenz der Messwertpaare und der Permeabilitätswertpaare ist bei unterschiedlichen Beträgen der beiden Differenzmesswerte gegeben, denn die beiden Differenzmesswerte unterscheiden sich dann in ihren Beträgen, wenn ein parasitäres Magnetfeld im Magnetfeldleiter anwesend ist und die Funktion der Permeabilität nichtlinear ist. Dieses Verfahren zur Bestimmung der Korrespondenz zeichnet sich durch besonders geringe Anforderungen an die Auswertung aus.

Das erfindungsgemäße Verfahren kann dadurch weiter verbessert werden, dass mindestens ein zweites Messwertpaartripel bestimmt wird und dass mindestens einer der Stromwerte des zweiten Messwertpaartripels von den Stromwerten des ersten Messwertpaartripels verschieden ist. Die Korrespondenz der Messwertpaare und der Permeabilitätswertpaare wird dann zusätzlich mit dem zweiten Messwertpaartripel bestimmt. Durch die Bestimmung der Korrespondenz mit dem ersten Messwertpaartripel und mit mindestens dem zweiten Messwertpaartripel erhöht die Zuverlässigkeit der Erkennung der Korrespondenz oder der Nichtkorrespondenz.

## Patentansprüche

1. Verfahren zum Betreiben eines magnetisch-induktiven Durchflussmessgeräts mit einer Magnetfelderzeugungseinrichtung zur Erzeugung eines ein strömendes Medium durchsetzenden Magnetfelds und mit einer Messeinrichtung zur Bestimmung von die Feldstärke des von dem Magnetfeld in dem strömende Medium induzierten elektrischen Feldes wiedergebenden Messwerten, wobei die Magnetfelderzeugungseinrichtung wenigstens einen Elektromagneten und einen zumindest teilweise vom Magnetfeld durchdrungenen Magnetfeldleiter umfasst und die Permeabilität des Magnetfeldleiters eine nichtlineare Funktion der magnetischen Feldstärke ist, wobei der Elektromagnet mindestens mit einem ersten Stromwert und einem zweiten Stromwert bestromt wird und wobei von der Messeinrichtung ein erster Messwert bei mit dem ersten Stromwert bestromten Elektromagneten und ein zweiter Messwert bei mit dem zweiten Stromwert bestromten Elektromagneten bestimmt wird,
**dadurch gekennzeichnet,**
**dass** ein erstes Messwertpaar aus dem ersten Stromwert und dem ersten Messwert und ein zweites Messwertpaar aus dem zweiten Stromwert und dem zweiten Messwert gebildet wird,
**dass** die Korrespondenz der Messwertpaare und der Funktion der Permeabilität bestimmt wird und
**dass** die Nichtkorrespondenz der Messwertpaare und der Funktion der Permeabilität signalisiert wird, wobei die Nichtkorrespondenz durch das Vorhandensein eines parasitären Magnetfelds zumindest teilweise im Magnetfeldleiter bedingt ist.

2. Verfahren nach Anspruch 1, **dadurch gekennzeichnet, dass** die Permeabilität Hysterese aufweist.

3. Verfahren nach Anspruch 1 oder 2 **dadurch gekennzeichnet, dass** die Messwerte bei mindestens einem der Stromwerte mindestens zweimal bestimmt und gemittelt werden.

4. Verfahren nach einem der Ansprüche 1 bis 3, **dadurch gekennzeichnet, dass** die Korrespondenz der Messwertpaare und der Funktion der Permeabilität dadurch bestimmt wird, dass mindestens zwei der Messwertpaare durch eine affine Abbildung abgebildet werden und dass eines der Messwertpaare durch die affine Abbildung auf ein Argument und den dazugehörigen Funktionswert der Funktion der Permeabilität abgebildet wird und die Nichtkorrespondenz der Messwertpaare und der Funktion der Permeabilität bei Übereinstimmung von mindestens einem der anderen abgebildeten Messwertpaare mit keinem Argument und dazugehörigem Funktionswert gegeben ist.

5. Verfahren nach einem der Ansprüche 1 bis 4, **dadurch gekennzeichnet, dass** die Korrespondenz der Messwertpaare und der Funktion der Permeabilität dadurch bestimmt wird, dass der Elektromagnet mindestens mit einem dritten Stromwert bestromt wird, dass von der Messeinrichtung ein dritter Messwert bei mit dem dritten Stromwert bestromten Elektromagneten bestimmt wird, dass ein drittes Messwertpaar aus dem dritten Stromwert und dem dritten Messwert gebildet wird, dass ein erstes Messwertpaartripel aus dem ersten Messwertpaar, dem zweiten Messwertpaar und dem dritten Messwertpaar gebildet wird, dass der erste Stromwert und der zweite Stromwert den gleichen Strombetrag, aber entgegengesetzte Vorzeichen aufweisen und der dritte Stromwert Null ist, dass ein erster Differenzmesswert durch Subtraktion des ersten Messwerts vom dritten Messwert und ein zweiter Differenzmesswert durch Subtraktion des zweiten Messwerts vom dritten Messwert bestimmt wird und dass der Betrag des ersten Differenzmesswerts und der Betrag des zweiten Differenzmesswerts verglichen werden, wobei die Nichtkorrespondenz der Messwertpaare und der Funktion der Permeabilität bei unterschiedlichen Beträgen gegeben ist.

6. Verfahren nach Anspruch 5, **dadurch gekennzeichnet, dass** mindestens ein zweites Messwertpaartripel bestimmt wird, dass mindestens einer der Stromwerte des zweiten Messwertpaartripels von den Stromwerten des ersten Messwertpaartripels verschieden ist, dass die Korrespondenz der Messwertpaare und der Funktion der Permeabilität mit dem zweiten Messwertpaartripel bestimmt wird.

## Claims

1. Method for operating a magnetic-inductive flow meter, with a magnetic field generating apparatus for generating a magnetic field which permeates a flowing medium, and with a measuring apparatus for determining measured values which represent the field intensity of the electrical field which has been induced by the magnetic field in the flowing medium, wherein the magnetic field generating apparatus comprises at least one electromagnet and one magnetic field conductor which has been penetrated at least partially by the magnetic field and the permeability of the magnetic field conductor is a nonlinear function of the magnetic field intensity, wherein the electromagnet is supplied with at least one first current value and one second current value, and wherein the measuring apparatus determines a first measured value when the electromagnet is supplied with the first current value and a second measured value when the electromagnet is supplied with a second current value,
**characterized in**
**that** a first pair of measured values is formed from the first current value and the first measured value and a second pair of measured values is formed from the second current value and the second measured value,
**that** the correspondence of the pairs of measured values and of the function of permeability is determined and
**that** the noncorrespondence of the pairs of measured values and the function of permeability is signaled, wherein the noncorrespondence is caused by the presence of a parasitic magnetic field at least partially in the magnetic field conductor.

2. Method according to claim 1, **characterized in that** the permeability has hysteresis.

3. Method according to claim 1 or 2, **characterized in that** the measured values are determined at least twice and averaged for at least one of the current values.

4. Method according to any one of claims 1 to 3, **characterized in that** the correspondence of the pairs of measured values and of the function of permeability is determined **in that** at least two of the pairs of measured values being transformed by affine transformation and that one of the pairs of measured values is transformed by the affine transformation onto one argument and the pertinent value of the permeability function and the noncorrespondence of the pairs of measured values and of the function of permeability is given when at least one of the other transformed pairs of measured values does not agree with any argument and pertinent function value.

5. Method according to any one of claims 1 to 4, **characterized in that** the correspondence of the pairs of measured values and of the function of permeability is determined by the electromagnet being supplied with one third current value, that the measuring apparatus determines a third measured value when the electromagnet is supplied with the third current value, that a third pair of measured values is formed from the third current value and the third measured value, that a first triple pair of measured values is formed from the first pair of measured values, the second pair of measured values and the third pair of measured values, that the first current value and the second current value have the same absolute value of current but opposite signs, and the third current value is zero, that a first difference measured value is determined by subtraction of the first measured value from the third measured value and a second difference measured value is determined by subtraction of the second measured value from the third measured value and that the absolute value of the first difference measured value and the absolute value of the second difference measured value are compared, there being noncorrespondence of the pairs of measured values and of the function of permeability for different absolute values.

6. Method according to claim 5, **characterized in that** at least a second triple pair of measured values is determined, that at least one of the current values of the second triple pair of measured values is different from the current values of the first triple pair of measured values, that the correspondence of the pairs of measured values and of the function of permeability is determined in addition with the second triple pair of measured values.

## Revendications

1. Procédé de fonctionnement d'un débitmètre à induction magnétique comprenant un dispositif générateur de champ magnétique destiné à générer un champ magnétique traversant un milieu en écoulement et un dispositif de mesure destiné à déterminer des valeurs de mesure reproduisant l'intensité du champ électrique induit par le champ magnétique dans le milieu en écoulement, le dispositif générateur de champ magnétique comprenant au moins un électroaimant et un conducteur de champ magnétique au moins partiellement traversé par le champ magnétique, et la perméabilité du conducteur de champ magnétique étant une fonction non linéaire de l'intensité du champ magnétique, l'électroaimant étant alimenté en courant avec au moins une première valeur de courant et une deuxième valeur de courant, et le dispositif de mesure déterminant une première valeur de mesure lorsque l'électroaimant est alimenté en courant avec la première valeur de courant et une deuxième valeur de mesure lorsque l'électroaimant est alimenté en courant avec la deuxième valeur de courant,
**caractérisé en ce que**
une première paire de valeurs de mesure est formée à partir de la première valeur de courant et de la première valeur de mesure et une deuxième paire de valeurs de mesure est formée à partir de la deuxième valeur de courant et de la deuxième valeur de mesure,
**en ce que** la correspondance des paires de valeurs de mesure et de la fonction de perméabilité est déterminée, et
**en ce que** la non-correspondance des paires de valeurs de mesure et de la fonction de perméabilité est signalée, la non-correspondance étant due à la présence d'un champ magnétique parasite au moins en partie dans le conducteur de champ magnétique.

2. Procédé selon la revendication 1, **caractérisé en ce que** la perméabilité présente une hystérésis.

3. Procédé selon la revendication 1 ou 2, **caractérisé en ce que** les valeurs de mesure sont déterminées au moins deux fois dans le cas d'au moins une des valeurs de courant et sont moyennées.

4. Procédé selon l'une des revendications 1 à 3, **caractérisé en ce que** la correspondance des paires de valeurs de mesure et de la fonction de perméabilité est déterminée par le fait qu'au moins deux des paires de valeurs de mesure sont reproduites par une application affine et par le fait qu'une des paires de valeurs de mesure est reproduite par l'application affine sur un argument et la valeur de fonction associée de la fonction de perméabilité et la non-correspondance des paires de valeurs de mesure et de la fonction de perméabilité est donnée en cas de coïncidence d'au moins une des autres paires de valeurs de mesure reproduites avec aucun argument ni valeur de fonction associée.

5. Procédé selon l'une des revendications 1 à 4, **caractérisé en ce que** la correspondance des paires de valeurs de mesure et de la fonction de perméabilité est déterminée par le fait que l'électroaimant est alimenté en courant au moins avec une troisième valeur de courant, **en ce qu'**une troisième valeur de mesure est déterminée par le dispositif de mesure dans le cas où l'électroaimant est alimenté en courant avec la troisième valeur de mesure, **en ce qu'**une troisième paire de valeurs de mesure est formée de la troisième valeur de courant et de la troisième valeur de mesure, **en ce qu'**un premier triplet de paires de valeurs de mesure est formé de la première paire de valeurs de mesure, de la deuxième paire de valeurs de mesure et de la troisième paire de valeurs de mesure, **en ce que** la première valeur de courant et la deuxième valeur de courant ont la même valeur absolue de courant, mais sont de signes opposés et la troisième valeur de courant est nulle, **en ce qu'**une première valeur de mesure différentielle est déterminée par soustraction de la première valeur de mesure de la troisième valeur de mesure et une deuxième valeur de mesure différentielle est déterminée par soustraction de la deuxième valeur de mesure de la troisième valeur de mesure et **en ce que** la valeur absolue de la première valeur de mesure différentielle et la valeur absolue de la deuxième valeur de mesure différentielle sont comparées entre elles, la non-correspondance des paires de valeurs de mesure et de la fonction de perméabilité étant données en cas de différentes valeurs absolues.

6. Procédé selon la revendication 5, **caractérisé en ce qu'**au moins un deuxième triplet de paires de valeurs de mesure est déterminé, **en ce qu'**au moins une des valeurs de courant du deuxième triplet de paires de valeurs de mesure est différente des valeurs de courant du premier triplet de paires de valeurs de mesure, **en ce que** la correspondance des paires de valeurs de mesure et de la fonction de perméabilité est déterminée par le deuxième triplet de paires de valeurs de mesure.
